# FASCICULE DE BREVET EUROPEEN

(11) **EP 1 470 078 B1**
(45) Date de publication et mention de la délivrance du brevet: **21.05.2008**
(21) Numéro de dépôt: 03734737.4
(22) Date de dépôt: 14.01.2003
(51) Int. Cl.: C01G 23/053

(54) **POLYMERE SOL-GEL A BASE D OXYDE DE TITANE**
AUF TITANOXID BASIERENDES SOL-GEL-POLYMER
TITANIUM OXIDE-BASED SOL-GEL POLYMER

(30) Priorité: 29.01.2002 FR 0201055
(43) Date de publication de la demande: 27.10.2004
(73) Titulaire: CENTRE NATIONAL DE LA RECHERCHE SCIENTIFIQUE (CNRS), 75016 Paris (FR)
(72) Inventeur: BROHAN, Luc, F-44240 LA CHAPELLE SUR ERDRE (FR); SUTRISNO, Hari, TULUNGAGUNG, JATIM (ID); JOUBERT, Olivier, F-44830 BRAINS (FR); CALDES-ROUILLON, Maria Teresa, F-44300 NANTES (FR); PUZENAT, Eric, F-44000 NANTES (FR); ROUET, A., F-44300 NANTES (FR); PIFFARD, Yves, F-44240 LA CHAPELLE SUR ERDRE (FR)
(74) Mandataire: Habasque, Etienne J. Jean-François
(86) Numéro de dépôt international: PCT/FR2003/000106
(87) Numéro de publication internationale: WO 2003/064324

(56) Documents cités:
- DATABASE CA [en ligne] CHEMICAL ABSTRACTS SERVICE, COLUMBUS, OHIO, US; FU, LIANSHE ET AL: "Preparation of monolithic TiO2 gel in presence of N,N-dimethylformamide" retrieved from STN Database accession no. 135:347833 XP002216419 & GONGNENG CAILIAO (2001), 32(3), 319-320,
- DATABASE CA [en ligne] CHEMICAL ABSTRACTS SERVICE, COLUMBUS, OHIO, US; YANG, RONGXING ET AL: "Study on stability of sol-gel solutions" retrieved from STN Database accession no. 132:199483 XP002216420 & GUILIN GONGXUEYUAN XUEBAO (1999), 19(4), 371-374,
- DATABASE CA [en ligne] CHEMICAL ABSTRACTS SERVICE, COLUMBUS, OHIO, US; ZHENG, MAOPING ET AL: "Studies on preparation and properties of TiO2/PVP nano-composites by sol-gel method" retrieved from STN Database accession no. 132:140878 XP002216421 & JINSHU XUEBAO (1999), 35(11), 1224-1228,

## Description

La présente invention concerne une composition de polymère à base d'oxyde de titane, son utilisation comme élément semi-conducteur dans une cellule photovoltaïque, ainsi qu'un procédé pour sa préparation.

Les cellules photovoltaïques convertissent l'énergie solaire en électricité en exploitant l'effet photovoltaïque qui existe à l'interface d'une jonction p-n entre deux semi-conducteurs. On a utilisé des semi-conducteurs à base de silicium, mais le coût élevé de la matière première n'est pas favorable au développement industriel de telles cellules. On a alors remplacé le silicium par l'oxyde de titane TiO₂ qui est un semi-conducteur bon marché et qui a des propriétés photo catalytiques stables. Ses applications dans le domaine photovoltaïque sont cependant limitées car il n'absorbe que dans un domaine étroit du spectre solaire, en raison d'une largeur de bande interdite élevée. Ce domaine correspond à la partie UV et couvre moins de 10% de la totalité du spectre solaire. Une solution a consisté à recouvrir la surface de l'oxyde de titane par un agent photo-sensibilisateur pour étendre son domaine de photo-activité dans la région du spectre solaire. Cette technique a été mise en oeuvre notamment à l'aide de complexe de ruthénium polypyridinique comme agent photo-sensibilisateur (US-5,084,365) et elle a permis d'atteindre des efficacités de l'ordre de 12%. Les cellules contenant comme semi-conducteur l'oxyde de titane activé par un agent photo-sensibilisateur ont un prix de revient inférieur à celui des cellules photovoltaïque de la technique antérieure. Mais leur durée de fonctionnement qui est d'environ 10 ans est nettement plus faible que celle des cellules au silicium monocristallin (qui est de l'ordre de 20 ans), et leur efficacité est moindre.

Les inventeurs ont maintenant trouvé que les performances d'un oxyde de titane utilisé comme semi-conducteur dans une cellule photovoltaïque pouvaient être optimisées par un contrôle à l'échelle microstructurale ou mésostructurale de la morphologie. Le but de la présente invention est donc de fournir un oxyde de titane particulier présentant des performances améliorées lorsqu'il est utilisé comme élément semi-conducteur d'une cellule photovoltaïque.

C'est pourquoi la présente invention a pour objet une composition à base d'oxyde de titane, un procédé pour sa préparation, ainsi qu'une cellule photovoltaïque qui le contient comme élément semi-conducteur.

La composition selon la présente invention est constituée essentiellement par un polymère à base d'oxyde de titane qui peut être représenté par la formule TiOₓ(OH)_{y}(H₂O)_{z} dans laquelle x+y+z=3, sous forme d'un gel ou sous forme d'un sol. Elle est caractérisée en ce que :
- le polymère a une structure à caractère unidimensionnel 1D et il est constitué de fibres enroulées concentriquement, avec une périodicité, déduite de l'espacement entre les fibres, entre 3,5 Å et 4 Å;
- chaque fibre est constituée par des octaèdres TiO₆
- chaque octaèdre TiO₆ partage deux arêtes opposées avec deux octaèdres adjacents (2 x 2,92 Å) pour former des chaînes infinies qui se développent selon l'axe d'une fibre,
- deux chaînes adjacentes forment des doubles files par mise en commun d'arêtes (2 x 3,27 Å).

La structure à caractère unidimensionnel du polymère TiOₓ(OH)_{y}(H₂O)₂ (désigné ci-après par polymère TiO) est détectée par microscopie électronique à transmission. La structure des chaînes est mise en évidence par une analyse EXAFS (Extented X rays Absorptions Fine Structure, ou spectroscopie d'absorption de rayons X).

Une composition de polymère selon l'invention (désignée ci-après par composition de polymère TiO) peut être translucide ou présenter une coloration. La composition est translucide lorsqu'elle est à l'abri de la lumière et que le titane est essentiellement sous la forme Ti⁴⁺, le polymère correspondant alors à la formule TiO(OH)₂. Lorsque le titane se trouve essentiellement sous la forme Ti³⁺ dans le polymère TiO, il existe une large bande d'absorption dans le domaine visible (entre 400 et 850 nm), qui se traduit par une coloration violette, bleue, bleu nuit, ou verte de la composition. La coloration évolue avec la proportion en Ti³⁺. Elle passe du vert pour les faibles concentrations en Ti³⁺ au violet pour les fortes concentrations. Lorsque tout le titane est sous forme Ti³⁺, le polymère TiO correspond à la formule TiO(OH) (H₂O).

Une composition de polymère TiO selon l'invention peut être obtenue à partir de TiOCl₂. Le composé TiOCl₂ étant très hygroscopique, il est utilisé sous forme TiOCl₂•yHCl, c'est-à-dire en solution dans une solution d'acide chlorhydrique concentrée. La solution d'HCl concentrée est avantageusement une solution aqueuse environ 2 M. La concentration en TiOCl₂ dans cette solution est de préférence entre 4 M et 5 M.

Selon un premier mode de réalisation, la composition de polymère TiO selon l'invention peut être obtenue sous forme oxydée dans laquelle le titane est au degré d'oxydation Ti⁴⁺, par un procédé qui consiste à :
- préparer une solution de TiOCl₂ dans du diméthylformamide (DMF) en introduisant TiOCl₂•yHCl dans le DMF, dans des proportions telles que la concentration en atomes de Ti (C_{Ti}) soit inférieure à 2 M,
- porter la solution ainsi obtenue à une température entre la température ambiante et 90°C, et
- maintenir la solution à cette température pendant une certaine durée.

La durée du maintien en température qui dépend de la température. Par exemple, lorsque la solution est maintenue à 65°C, une durée de 24 h est suffisante.

Le polymère TiO(OH)₂ ainsi obtenu peut être transformé dans sa forme réduite dans laquelle au moins une partie du titane est au degré d'oxydation Ti³⁺, par une irradiation UV (par exemple à λ = 360 nm) de la composition sous atmosphère inerte, qui provoque une coloration (violette, bleue ou verte suivant la concentration en Ti³⁺), cette coloration étant maintenue lorsque l'irradiation cesse.

La composition de polymère TiO est obtenue sous forme d'une solution colloïdale ou sol dans DMF lorsque C_{Ti} est inférieur à 1 M, et sous forme de gel lorsque C_{Ti} est supérieur à 1 M.

Dans un deuxième mode de réalisation, la composition de polymère TiO de l'invention est obtenue directement sous forme réduite dans laquelle au moins une partie du titane est au degré d'oxydation Ti⁺³, par un procédé qui consiste à réduire TiOCl₂ à l'aide d'une espèce qui est oxydable à un potentiel inférieur à -0,05 V par rapport à l'électrode normale à hydrogène. A titre d'exemple, on peut citer les métaux au degré d'oxydation 0 tels que Ni, Fe, Al, Cr, Zr, Ti, Nb, Cs, Rb, Na, K, Li, La, Ce, les composés ioniques dans lesquels le cation est choisi parmi V²⁺, Ti²⁺ et Cr²⁺, et les composés ioniques dans lesquels l'anion est choisi parmi S₂O₃²⁻, H⁻, et S₂²⁻. Le zinc est particulièrement préféré. Dans ce cas, la composition de polymère TiO selon l'invention est obtenue avec une coloration. Si elle est ensuite soumise à une irradiation par un rayonnement UV, la teneur en espèce Ti³⁺ augmente, et sa coloration évolue du vert au violet, puis au bleu, à mesure que la teneur en ions Ti³⁺ augmente.

Une première variante du procédé de préparation mettant en oeuvre une réduction par une espèce oxydable consiste à préparer une solution de TiOCl₂ dans du diméthylformamide (DMF) à partir de TiOCl₂•yHCl, telle que la concentration en atomes de Ti (C_{Ti}) soit inférieure à 2 M, à ajouter l'espèce oxydable, à porter la solution à une température entre la température ambiante et 90°C, et à maintenir la solution à cette température pendant une certaine durée, qui dépend de la température.

Une seconde variante du procédé de préparation mettant en oeuvre une réduction par une espèce oxydable consiste à introduire l'espèce oxydable dans une solution TiOCl₂•yHCl dans laquelle C_{Ti} est inférieure à 2 M, et à maintenir le milieu réactionnel à une température entre la température ambiante et 90°C.

Dans les deux variantes, le métal est introduit de préférence sous forme de copeaux. Le composé ionique peut être introduit sous forme de poudre, de liquide ou de gaz.

Lorsqu'une composition selon l'invention est préparée par un procédé utilisant le DMF, elle contient du chlorure de diméthylammonium et de l'acide formique. Ces constituants peuvent être détectés notamment par une analyse RMN du proton (¹H), qui permet également d'en déterminer la quantité. Lorsqu'elle la concentration C_{Ti} dans le mélange réactionnel initial est inférieur à 1 M, la composition est une solution colloïdale de polymère non réticulé dans le DMF. Lorsque la concentration initiale C_{Ti} est supérieure à 1 M, le polymère est réticulé et la composition est sous forme de gel.

Lorsqu'une composition selon l'invention est préparée selon la seconde variante du procédé mettant en oeuvre une réduction par une espèce oxydable, c'est-à-dire en l'absence de DMF, ladite composition est une solution colloïdale de polymère non réticulé dans l'eau lorsque C_{Ti} est inférieure à 1 M. Lorsque C_{Ti} est supérieure à 1 M, le polymère est réticulé et la composition est sous forme de gel.

Quel que soit le procédé mis en oeuvre pour obtenir la forme réduite du polymère présentant une coloration, la forme oxydée peut être obtenue en soumettant la composition de polymère à une oxydation à l'air, de sorte qu'il reprend son aspect translucide.

Une composition de polymère TiO selon l'invention présente un caractère photochrome. Lorsqu'elle est obtenue sous forme de gel, elle peut être utilisée avantageusement dans une cellule photovoltaïque dans laquelle la matière active de la photo-anode est la composition contenant la forme réduite Ti³⁺, et la matière active de la photo-cathode est une composition contenant la forme oxydée Ti⁴⁺.

Une composition de l'invention peut en outre être utilisée pour la production de vitrages filtrant le soleil. Une vitre recouverte d'une composition de l'invention sous forme d'un gel reste translucide lorsqu'elle est à l'abri du soleil. Sous l'effet de l'irradiation par la lumière visible, la vitre prend une coloration bleu nuit. Ce phénomène peut être rendu réversible par application d'un potentiel permettant une oxydation.

La présente invention est décrite plus en détail par les exemples suivants qui sont donnés pour illustration et auxquels elle n'est cependant pas limitée.

### Exemple 1

On a introduit dans un tube à essais 10 ml de DMF et 4 ml d'une solution de TiOCl₂ 4,3 M dans l'acide chlorhydrique 2M, sous atmosphère inerte de N₂. Après avoir fermé le tube, on l'a placé dans une étuve à 65°C et on l'a maintenu à cette température pendant 24 heures. Ensuite, on a laissé refroidir et on a constaté l'apparition d'un gel transparent à température ambiante.

La présence de chlorure de diméthylammonium et d'acide formique est détectée par RMN du ¹H et du ¹³C, par IR et par Raman.

Après avoir été exposé à la lumière visible, le gel a pris une coloration bleu intense, qui résulte de la réduction de Ti⁴⁺ en Ti³⁺. Ce phénomène est réversible et par ouverture du tube, il se produit une oxydation en présence de l'oxygène de l'air, et le gel redevient transparent après quelques minutes.

L'image de haute résolution, obtenue par microscopie électronique à transmission, montre que la structure du polymère TiO(OH)₂ obtenu présente un caractère unidimensionnel 1D. Les fibres du polymère sont enroulées concentriquement à la manière d'une boule de coton. La présence d'un désordre important dans la direction perpendiculaire à l'empilement des fibres se manifeste sur le cliché de diffraction par la présence de taches lenticulaires diffuses. La périodicité, déduite de l'espacement entre les fibres, peut être estimée à 3,5-4 Å.

### Exemple 2

On a reproduit le mode opératoire décrit dans l'exemple 1, pour plusieurs préparations, en faisant varier uniquement la concentration C_{Ti} dans le tube à essais. Chaque tube à essai, rempli sous air ou sous N₂, a été soumis à un traitement thermique analogue à celui de l'exemple 1.

La formation d'un gel a été constatée uniquement pour des concentrations C_{Ti} entre 1 M et 2 M. Pour des concentrations C_{Ti} < 1 M, le mélange reste liquide et il est constitué par une solution colloïdale du polymère. Pour des concentrations C_{Ti} > 2 M, il se forme un produit blanc opaque contenant une phase polymérique transparente et un précipité blanc amorphe, ou un précipité blanc d'anatase pour les concentrations très élevées.

### Exemple 3

Les propriétés optiques de divers échantillons ont été mesurées pour divers états d'irradiation. A cet effet, on a préparé quatre échantillons sous air ou sous azote, à partir d'une solution de TiOCl₂ identique à celle utilisée dans l'exemple 1 :

| N° | C_{Ti} (mol/l) | Vol. "TiOCl₂" | Vol. DMF | O₂ | N₂ |
|---|---|---|---|---|---|
| 1 | 1,6 M | 1,3 ml | 2,15 ml | X | |
| 2 | 1,6 M | 1,3 ml | 2,15 ml | | X |
| 3 | 1,45 M | 1,1 ml | 2,15 ml | X | |
| 4 | 1,45 M | 1,1 ml | 2,15 ml | | X |

Dans une première série d'essais, on a soumis une fraction de chacune des solutions 1 à 4 à une irradiation UV (λ = 360 nm) pendant 180 heures.

Dans une seconde série d'essais, on a soumis une fraction de chacune des solutions 1 à 4 à un traitement thermique à 65°C pendant 15 heures, et l'on a ensuite soumis chaque fraction à une irradiation UV (λ = 360 nm) pendant 180 heures.

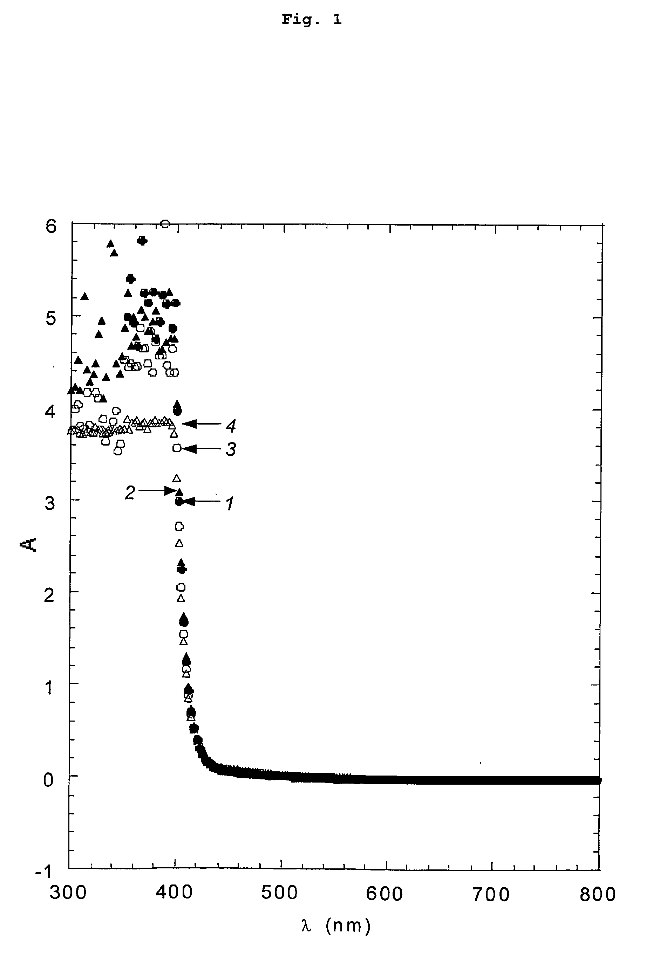

Les figures 1 à 4 représentent les spectres d'absorption optique des solutions après différents traitements. L'absorption A est indiquée en ordonnée, en unités arbitraires. La longueurs d'onde λ, en nanomètres, est donnée en abscisse. Sur chacune des figures, les spectres d'une solution sont représentés par les signes suivants :

| Solution 1 | Solution 2 | Solution 3 | Solution 4 |
|---|---|---|---|
| ● | ▲ | ○ | Δ |

La figure 1 représente le spectre d'absorption optique de la fraction non traitée de chacune des solutions 1 à 4. Les quatre spectres sont quasiment identiques et montrent qu'il n'y a pas d'absorption dans le domaine visible, et que l'influence de la concentration et de l'atmosphère de conditionnement est négligeable.

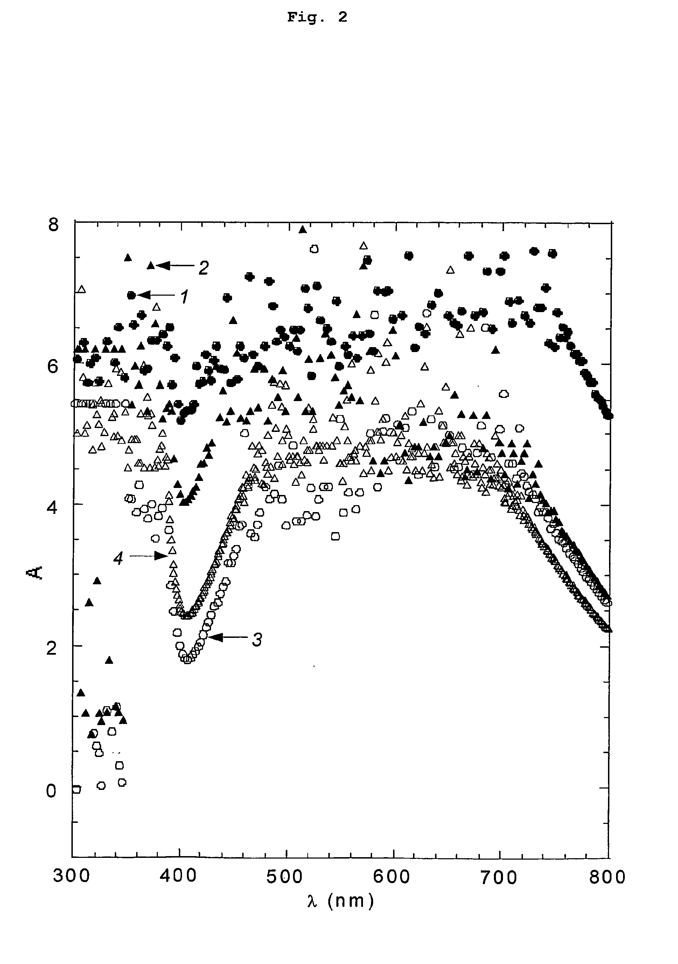

La figure 2 représente le spectre d'absorption optique de la fraction de chacune des solutions 1 à 4 soumise à irradiation UV pendant 180 heures. Les spectres indiquent la présence d'une forte absorption qui s'étend sur un large domaine du visible, ainsi qu'un faible déplacement du front d'absorption vers des longueurs d'onde plus courtes.

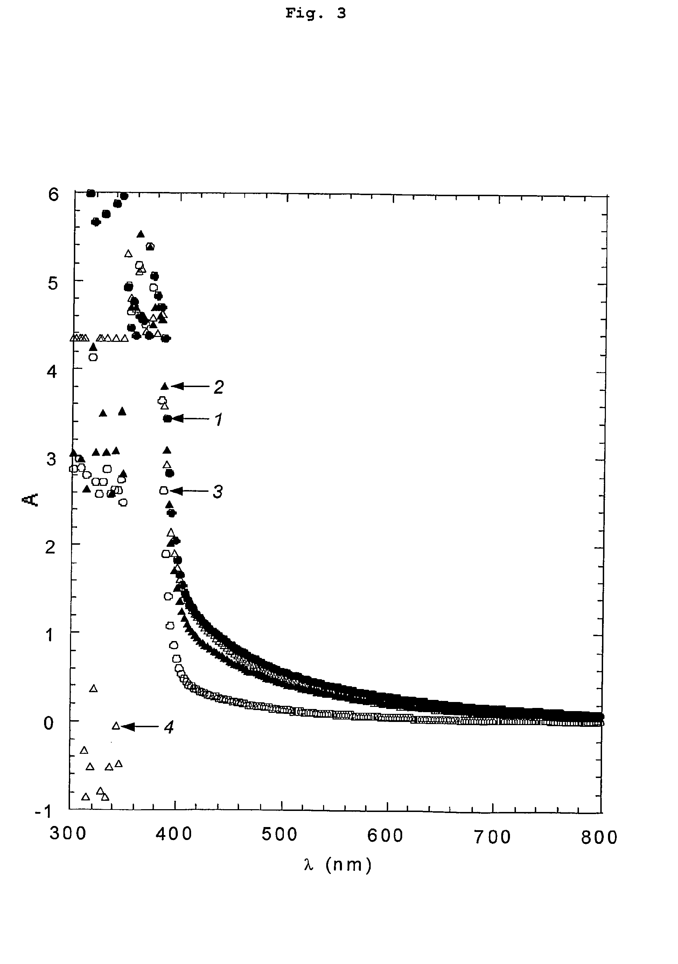

La figure 3 représente le spectre d'absorption optique de la fraction de chacune des solutions 1 à 4 soumise à un chauffage à 65°C pendant 15 heures. Les spectres indiquent un faible déplacement du front d'absorption vers des longueurs d'onde plus courtes, par rapport aux spectres des solutions initiales non traitées.

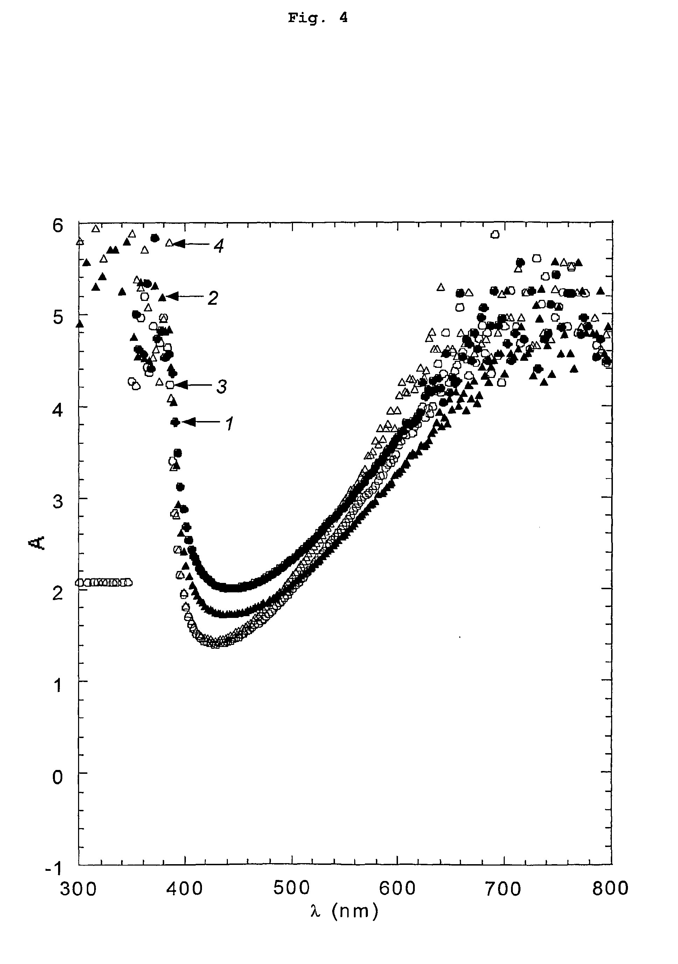

La figure 4 représente le spectre d'absorption optique de la fraction de chacune des solutions 1 à 4 soumise à un chauffage à 65°C pendant 15 heures, puis à une irradiation UV pendant 15 heures. Les spectres indiquent une large bande d'absorption dans le domaine visible. L'absorption est plus importante pour le gel et son maximum se déplace vers des longueurs d'ondes plus grandes que dans le cas des solutions initiales correspondantes.

La structure du gel de polymère TiO(OH)₂ a été caractérisée par une analyse EXAFS au seuil K du titane. Les résultats de l'affinement donnent le nombre N d'atomes voisins, la distance R entre un atome absorbant et ses voisins, le facteur de Debye-Waller σ le décalage en énergie ΔEₒ et le résidu ρ. Les résultats sont donnés dans le tableau ci-dessous.

| TiO (OH₂) | N | R(Å) | σ.10²(Å) | ΔEₒ(eV) | ρ(%) |
|---|---|---|---|---|---|
| Ti - O | 3,91 | 1,89 | 1,3 | 0,48 | |
| Ti - O | 2 ,08 | 1,98 | 2,8 | 0,00 | 2,32 |
| Ti - Ti | 2, 28 | 2,92 | 6, 3 | 2, 84 | |
| Ti - Ti | 1,71 | 3,27 | 1,7 | 6,85 | |

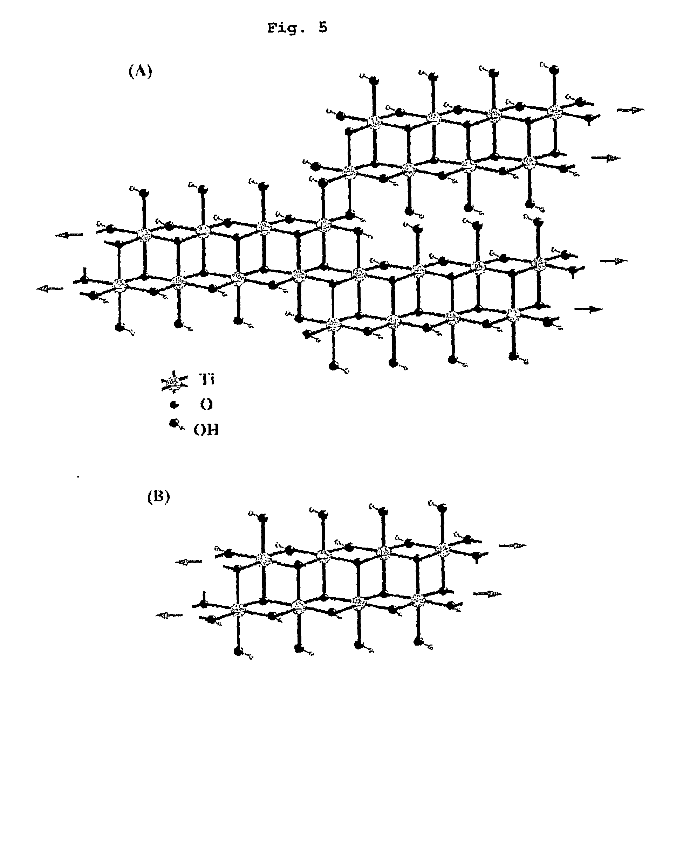

La structure idéalisée du ruban de polymère de TiO(OH)₂ qui présente un caractère ID, est représentée sur la figure 5 (B). Elle est comparable à la structure observée pour la Hollandite. Chaque octaèdre TiO₆ partage deux arêtes opposées avec deux octaèdres adjacents (2,92 Å) pour former des chaînes infinies se développant selon l'axe de la fibre. Deux chaînes adjacentes forment des doubles files par mise en commun d'arêtes (2 x 3,27 Å). En raison de l'écart du nombre réel de voisins et la valeur idéale "2", le polymère obtenu peut être réticulé tel que représenté sur la figure 5 (A).

### Exemple 4

On a préparé 4 solutions en introduisant dans le DMF une solution de TiOCl₂ dans HCl concentré, en quantités telles que les concentrations C_{Ti} soient respectivement de 0,03 M, 0,04 M, 0,05 M et 0,06 M. A 3 ml de chacune de ces solutions, on a ajouté 100 mg de copeaux de zinc.

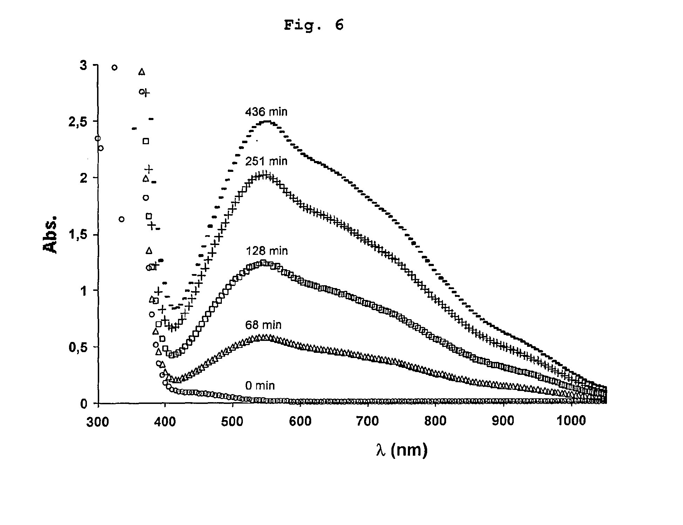

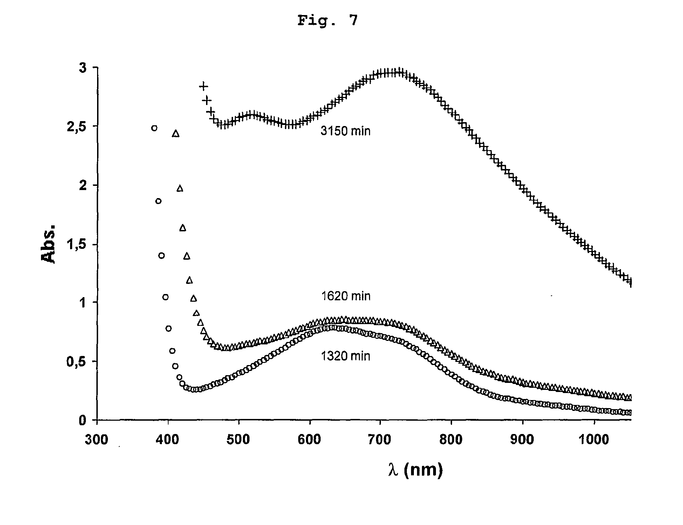

On a suivi le changement de coloration dans le temps en mesurant l'absorption des échantillons à l'aide du spectromètre d'absorption W-Vis-NIR Cary entre 300 et 1200 nm. Les spectres d'absorption sont représentés sur les figures 6 et 7. L'absorption ABS est indiquée en ordonnée (unités arbitraires). La longueur d'onde λ, est indiquée en abscisse (nm). Les spectres montrent qu'il se forme, entre t = 0 min et t = 500 min (fig. 6), un pic d'absorption à 550 nm qui augmente au cours du temps, et qui est accompagné de trois épaulements, à 630 nm, à 740 nm et aux environs de 900 nm. Au delà de 500 min (fig. 7), ce pic tend à disparaître et laisse place à une large bande d'absorption comprise entre 630 et 740 nm. Au bout de 3150 min, soit plus de 2 jours, l'absorption est importante quelque soit la longueur d'onde dans le domaine du visible. Deux pics ressortent cependant à 550 nm et à 710 nm.

## Revendications

1. Composition de polymère constituée essentiellement par un polymère à base d'oxyde de titane qui peut être représenté par la formule TiOₓ(OH)_{y}(H₂O)_{z} dans laquelle x+y+z=3, sous forme d'un gel ou sous forme d'un sol, **caractérisée en ce que** :
- le polymère a une structure à caractère unidimensionnel 1D et il est constitué de fibres enroulées concentriquement, avec une périodicité, déduite de l'espacement entre les fibres, entre 3,5 Å et 4 Å;
- chaque fibre est constituée par des octaèdres TiO₆,
- chaque octaèdre TiO₆ partage deux arêtes opposées avec deux octaèdres adjacents (2 x 2,92 Å) pour former des chaînes infinies qui se développent selon l'axe d'une fibre,
- deux chaînes adjacentes forment des doubles files par mise en commun d'arêtes (2 x 3,27 Å).

2. Composition de polymère selon la revendication 1, **caractérisée en ce qu'**elle est translucide et qu'elle contient le titane du polymère sous forme oxydée Ti⁴⁺.

3. Composition de polymère selon la revendication 1, **caractérisée en ce qu'**elle a une coloration violette, bleue ou verte et au moins une partie du titane du polymère est sous forme Ti³⁺.

4. Procédé de préparation d'une composition selon la revendication 2, **caractérisé en ce qu'**il consiste à :
- préparer une solution de TiOCl₂ dans du diméthylformamide (DMF) en introduisant dans le DMF, du TiOCl₂ dissous dans une solution aqueuse concentrée en HCl, dans des proportions telles que la concentration en atomes de Ti (C_{Ti}) soit inférieure à 2 M,
- porter la solution ainsi obtenue à une température entre la température ambiante et 90°C, et
- maintenir la solution à cette température pendant une certaine durée.

5. Procédé de préparation d'une composition selon la revendication 3, **caractérisé en ce qu'**il consiste à :
- préparer une solution de TiOCl₂ dans du diméthylformamide (DMF) en introduisant dans le DMF, du TiOCl₂ dissous dans une solution aqueuse concentrée en HCl, dans des proportions telles que la concentration en atomes de Ti (C_{Ti}) soit inférieure à 2 M,
- porter la solution ainsi obtenue à une température entre la température ambiante et 90°C, et
- maintenir la solution à cette température pendant une certaine durée,
- soumettre la composition obtenue à une irradiation UV sous atmosphère inerte.

6. Procédé de préparation d'une composition selon la revendication 3, **caractérisé en ce qu'**il consiste à réduire TiOCl₂ dans de l'acide chlorhydrique concentré, à l'aide d'une espèce qui est oxydable à un potentiel inférieur à - 0,05 V par rapport à l'électrode normale à hydrogène.

7. Procédé selon la revendication 6, **caractérisé en ce que** l'espèce oxydable est choisie parmi les métaux au degré d'oxydation 0 tels que Ni, Fe, Al, Cr, Zr, Ti, Nb, Cs, Rb, Na, K, Li, La, Ce, les composés ioniques dans lesquels le cation est choisi parmi V²⁺, Ti²⁺ et Cr²⁺, et les composés ioniques dans lesquels l'anion est choisi parmi S₂O₃²⁻ , H⁻, et S₂²⁻.

8. Procédé selon la revendication 7, **caractérisé en ce que** le métal est le zinc.

9. Procédé selon la revendication 6, **caractérisé en ce qu'**il comprend en outre une étape d'irradiation UV sous atmosphère inerte.

10. Procédé selon la revendication 6, **caractérisé en ce qu'**il consiste à préparer une solution de TiOCl₂ dans du diméthylformamide (DMF) à partir d'une solution de TiOCl₂ dans HCl concentré, la concentration en atomes de Ti (C_{Ti}) de la solution étant inférieure à 2 M, à ajouter l'espèce oxydable, à porter la solution à une température entre la température ambiante et 90°C, et à maintenir la solution à cette température.

11. Procédé selon la revendication 6, **caractérisé en ce qu'**il consiste à introduire l'espèce oxydable dans une solution de TiOCl₂ dans l'acide chlorhydrique concentré dans laquelle C_{Ti} est inférieure à 2 M, et à maintenir le milieu réactionnel à une température entre la température ambiante et 90°C.

12. Procédé selon l'une des revendications 4 ou 6, **caractérisé en ce que** C_{Ti} est inférieur à 1 M pour l'obtention d'une composition sous forme de sol.

13. Procédé selon l'une des revendications 4 ou 6, **caractérisé en ce que** C_{Ti} est supérieur à 1 M pour l'obtention d'une composition sous forme de gel.

14. Cellule photovoltaïque comprenant une photo-anode et une photo-cathode dans un électrolyte, **caractérisée en ce que** la photo-anode comprend une plaque de verre conducteur revêtue d'une couche d'une composition selon la revendication 1 sous forme de gel contenant le titane du polymère sous forme Ti³⁺ et la photo-cathode est une plaque de verre conducteur revêtue d'une couche de composition selon la revendication 1 sous forme de gel contenant le titane sous forme Ti⁴⁺.

15. Vitrage filtrant le soleil, **caractérisé en ce qu'**il comprend une plaque de verre recouverte d'une couche de composition selon l'invention sous forme d'un gel.

## Claims

1. Polymer composition constituted substantially by a titanium-oxide-based polymer which can be represented by the formula TiOₓ(OH)_{y}(H₂O)_{z} in which x + y + z = 3, in the form of a gel or in the form of a sol,
**characterised in that**:
- the polymer has a structure of one-dimensional 1D nature and is constituted by fibres wound concentrically with a periodicity, deduced from the spacing between the fibres, of from 3.5 Å to 4 Å;
- each fibre is constituted by TiO₆ octahedrons;,
- each TiO₆ octahedron shares two opposite edges with two adjacent octahedrons (2 x 2.92 Å) to form infinite chains which develop along the axis of a fibre;
- two adjacent chains form double strands by the sharing of edges (2 x 3.27 Å).

2. Polymer composition according to claim 1, **characterised in that** it is translucent and **in that** it contains the titanium of the polymer in oxidised form Ti⁴⁺.

3. Polymer composition according to claim 1, **characterised in that** it has a violet, blue or green colouration and at least part of the titanium of the polymer is in Ti³⁺ form.

4. Process for the preparation of a composition according to claim 2, **characterised in that** it comprises:
- preparing a solution of TiOCl₂ in dimethylformamide (DMF) by introducing into the DMF TiOCl₂ dissolved in a concentrated aqueous HCl solution, in proportions such that the concentration of Ti atoms (C_{Ti}) is less than 2 M,
- bringing the solution so obtained to a temperature between ambient temperature and 90°C, and
- maintaining the solution at that temperature for a certain time.

5. Process for the preparation of a composition according to claim 3, **characterised in that** it comprises:
- preparing a solution of TiOCl₂ in dimethylformamide (DMF) by introducing into the DMF TiOCl₂ dissolved in a concentrated aqueous HCl solution, in proportions such that the concentration of Ti atoms (C_{Ti}) is less than 2 M,
- bringing the solution so obtained to a temperature between ambient temperature and 90°C, and
- maintaining the solution at that temperature for a certain time,
- subjecting the resulting composition to UV irradiation under an inert atmosphere.

6. Process for the preparation of a composition according to claim 3, **characterised in that** it comprises reducing TiOCl₂ in concentrated hydrochloric acid with the aid of a species that is oxidisable at a potential of less than -0.05 V relative to the normal hydrogen electrode.

7. Process according to claim 6, **characterised in that** the oxidisable species is selected from metals of oxidation number 0, such as Ni, Fe, A1, Cr, Zr, Ti, Nb, Cs, Rb, Na, K, Li, La, Ce, ionic compounds in which the cation is selected from V²⁺ , Ti²⁺ and Cr²⁺, and ionic compounds in which the anion is selected from S₂O₃²⁻, H⁻ and S₂²⁻_{.}

8. Process according to claim 7, **characterised in that** the metal is zinc.

9. Process according to claim 6, **characterised in that** it further comprises a step of UV irradiation under an inert atmosphere.

10. Process according to claim 6, **characterised in that** it comprises preparing a solution of TiOCl₂ in dimethylformamide (DMF) starting from a solution of TiOCl₂ in concentrated HCl, the concentration of Ti atoms (C_{Ti}) in the solution being less than 2 M, adding the oxidisable species, bringing the solution to a temperature between ambient temperature and 90°C, and maintaining the solution at that temperature.

11. Process according to claim 6, **characterised in that** it comprises introducing the oxidisable species into a solution of TiOCl₂ in concentrated hydrochloric acid in which C_{Ti} is less than 2 M, and maintaining the reaction mixture at a temperature between ambient temperature and 90°C.

12. Process according to either claim 4 or claim 6, **characterised in that** C_{Ti} is less than 1 M in order to obtain a composition in sol form.

13. Process according to either claim 4 or claim 6, **characterised in that** C_{Ti} is greater than 1 M in order to obtain a composition in gel form.

14. Photovoltaic cell comprising a photo-anode and a photo-cathode in an electrolyte, **characterised in that** the photo-anode comprises a conductive glass plate coated with a layer of a composition according to claim 1 in gel form containing the titanium of the polymer in Ti³⁺ form, and the photo-cathode is a conductive glass plate coated with a layer of composition according to claim 1 in gel form containing the titanium in Ti⁴⁺ form.

15. Sun-filtering glazing, **characterised in that** it comprises a sheet of glass covered with a layer of composition according to the invention in the form of a gel.

## Patentansprüche

1. Polyner-Zusammensetzung, die im Wesentlichen aus einem Polymer auf der Grundlage von Titanoxid besteht, das durch die Formel TiOₓ(OH)_{y}(H₂O)_{z} dargestellt werden kann, wobei x+y+z=3 gilt, in Form eines Gels oder in Form eines Sols, **dadurch gekennzeichnet, dass**:
- das Polymer eine Struktur von eindimensionalem Charakter 1D aufweist und es aus Fasern besteht, die konzentrisch aufgewickelt sind, mit einer Periodizität, die sich von dem Freiraum zwischen den Fasern, zwischen 3,5 Å und 4 Å, ableitet;
- jede Faser aus TiO₆-Oktaedern besteht,
- jeder TiO₆-Oktaeder sich zwei nebeneinander liegende Kanten mit zwei gegenüberliegenden Oktaedern (2 x 2,92 Å) teilt, um unendliche Ketten zu bilden, die sich längs der Achse einer Faser entwickeln;
- zwei nebeneinander liegende Ketten durch Verwendung gemeinsamer Kanten (2 x 3,27 Å) Doppelstränge bilden.

2. Polymer-Zusammensetzung nach Anspruch 1, **dadurch gekennzeichnet, dass** sie durchscheinend ist und dass sie das Titan des Polymers in Form von oxidiertem Ti⁴⁺ enthält.

3. Polymer-Zusammensetzung nach Anspruch 1, **dadurch gekennzeichnet, dass** sie eine violette, blaue oder grüne Färbung besitzt und mindestens ein Teil des Titans des Polymers in Form von Ti³⁺ vorliegt.

4. Verfahren zur Herstellung einer Zusammensetzung nach Anspruch 2, **dadurch gekennzeichnet, dass** es aus Folgendem besteht:
- Herstellen einer Lösung von TiOCl₂ in Dimethylformamid (DMF) durch Einleiten des in einer wässrigen konzentrierten HCl-Lösung gelösten TiOCl₂ in das DMF, in solchen Anteilen, dass die Konzentration an Ti-Atomen (C_{Ti}) unter 2 M liegt;
- Bringen der so erhaltenen Lösung auf eine Temperatur zwischen der Umgebungstemperatur und 90 °C, und
- Halten der Lösung bei dieser Temperatur während einer bestimmten Dauer.

5. Verfahren zur Herstellung einer Zusammensetzung nach Anspruch 3, **dadurch gekennzeichnet, dass** es aus Folgendem besteht:
- Herstellen einer Lösung von TiOCl₂ in Dimethylformamid (DMF) durch Einleiten des in einer wässrigen konzentrierten HCl-Lösung gelösten TiOCl₂ in das DMF, in solchen Anteilen, dass die Konzentration an Ti-Atomen (C_{Ti}) unter 2 M liegt,
- Bringen der so erhaltenen Lösung auf eine Temperatur zwischen Umgebungstemperatur und 90 °C, und
- Halten der Lösung bei dieser Temperatur während einer bestimmten Dauer,
- Durchführen mit der erhaltenen Zusammensetzung einer UV-Bestrahlung unter Inert-Atmosphäre.

6. Verfahren zur Herstellung einer Zusammensetzung nach Anspruch 3, **dadurch gekennzeichnet, dass** es in der Reduktion von TiOCl₂ in konzentrierter Chlorwasserstoffsäure mit Hilfe einer Spezies besteht, die bei einem Potential, bezüglich der Wasserstoff-Normalelektrode, von unter -0,05 V oxidierbar ist.

7. Verfahren nach Anspruch 6, **dadurch gekennzeichnet, dass** die oxidierbare Spezies ausgewählt ist aus den Metallen mit der Oxidationszahl 0, wie Ni, Fe, Al, Cr, Zr, Ti, Nb, Cs, Rb, Na, K, Li, La, Ce, den ionischen Verbindungen, wobei das Kation aus V²⁺, Ti²⁺, und Cr²⁺ ausgewählt ist, und den ionischen Zusammensetzungen, wobei das Anion aus S₂O₃²⁻, H⁻ und S₂²⁻ ausgewählt ist.

8. Verfahren nach Anspruch 7, **dadurch gekennzeichnet, dass** das Metall Zink ist.

9. Verfahren nach Anspruch 6, **dadurch gekennzeichnet, dass** es unter anderem einen UV-Bestrahlungsschritt unter Inert-Atmosphäre aufweist.

10. Verfahren nach Anspruch 6, **dadurch gekennzeichnet, dass** es darin besteht, eine Lösung von TiOCl₂ in Dimethylformamid (DMF) aus einer Lösung von TiOCl₂ in konzentrierter HCl herzustellen, wobei die Konzentration an Ti-Atomen (C_{Ti}) der Lösung unter 2 M liegt, die oxidierbare Spezies zuzugeben, die Lösung auf eine Temperatur zwischen Umgebungstemperatur und 90 °C zu bringen und die Lösung bei dieser Temperatur zu halten.

11. Verfahren nach Anspruch 6, **dadurch gekennzeichnet, dass** es darin besteht, die oxidierbare Spezies in eine Lösung von TiOCl₂ in konzentrierter Chlorwasserstoffsäure einzuleiten, wobei C_{Ti} unter 2 M liegt, und darin, das Reaktionsmedium bei einer Temperatur zwischen Umgebungstemperatur und 90 °C zu halten.

12. Verfahren nach einem der Ansprüche 4 oder 6, **dadurch gekennzeichnet, dass** C_{Ti} unter 1 M liegt, um eine Zusammensetzung in Gelform zu erhalten.

13. Verfahren nach einem der Ansprüche 4 oder 6, **dadurch gekennzeichnet, dass** C_{Ti} über 1 M liegt, um eine Zusammensetzung in Gelform zu erhalten.

14. Photovoltaische Zelle, die eine Photoanode und eine Photokatode in einem Elektrolyt umfasst, **dadurch gekennzeichnet, dass** die Photoanode eine leitende Glasplatte umfasst, die mit einer Schicht einer Zusammensetzung nach Anspruch 1 in Gelform bedeckt ist, die das Titan des Polymers in Form von Ti³⁺ enthält, und die Photokatode eine leitende Glasplatte ist, die mit einer Schicht der Zusammensetzung nach Anspruch 1 in Gelform bedeckt ist, die das Titan in Form von Ti⁴⁺ enthält.

15. Glasscheibe, die Sonnenlicht filtert, **dadurch gekennzeichnet, dass** sie eine Glasplatte umfasst, die mit der Zusammensetzung nach Anspruch 1 in Form eines Gels bedeckt ist.
